# EUROPEAN PATENT APPLICATION

(11) **EP 2 407 860 A1**
(43) Date of publication of application: **18.01.2012**
(21) Application number: 09841535.9
(22) Date of filing: 11.03.2009
(51) Int. Cl.: G06F 3/033, G06F 1/16

(54) **POINTING DEVICE AND ELECTRONIC DEVICE HAVING THE SAME**

(71) Applicant: Innochips Technology Co., Ltd., Gyeonggi-do 425-090 (KR)
(72) Inventor: PARK, In-Kil, Gyeonggi-Do 446-788 (KR); KIM, Dae Kyum, Incheon 405-740 (KR)
(74) Representative: Michalski Hüttermann & Partner Patentanwälte
(86) International application number: PCT/KR2009/001209
(87) International publication number: WO 2010/104221

(57) **Abstract**

Provided are a pointing device and an electronic device including the pointing device. The pointing device includes: an actuating member configured to be moved by a user; a magnet part disposed at a lower side of the actuating member; a cover part configured to cover the actuating member while exposing a part of the actuating member; an intermediate member including a center part configured to support the magnet part, a plurality of pattern parts extending from the center part and having a curved shape, a plurality of fixing parts disposed at ends of the pattern parts and fixed to the cover part, and a plurality of fixing protrusion parts extending from the center part for fixing the magnet part and the center part to the actuating member; and a sensor unit configured to output an electric signal by detecting a movement of the magnet part.

## Description

### [Technical Field]

The present disclosure relates to a pointing device and an electronic device including the pointing device, and more particularly, to a slim and small-sized pointing device in which an actuating member can be moved within a sufficient range by a small intermediate member.

### [Background Art]

Recent electronic devices are small and easy to use owing to graphic user interface (GUI). Various input devices such as a mouse and a touch pad are used to move a cursor of GUI.

In an input device of the related art, two-dimension movement of a magnet is detected by a sensor capable of sensing the moving direction and magnetic intensity of the magnet, and the movement of a cursor on a screen is controlled using the detected result. Such an input device includes a silicon resin on a substrate, a magnet disposed on the top side of the silicon resin, and a sensor attached to the bottom side of the substrate.

Such an input device using a silicon resin (rubber) is disclosed in Korean Patent Publication No. 10-2004-002918. In the disclosed input device, a silicon resin is used instead of a conventional coil spring to reduce the number of components and improve the efficiency of assembling. The silicon resin is easily deformed by an external force and returns to its original shape when the external force is removed.

However, the silicon resin can be easily damaged due to friction between the silicon resin and a substrate. Furthermore, an install region of the silicon resin where a magnet is disposed and a neighboring region of the install region are thinner than other regions of the silicon region, and the thinner region is protruded more than the other regions. Therefore, the overall thickness of the input device (pointing device) increases.

The size of the pointing device is affected by the size of the silicon resin than by the size of the magnet. The reason for this is that the silicon resin has a relatively large size for providing sufficient elastic and resilient forces. The silicon resin provides elastic and resilient forces when it is compressed or extended. Therefore, if the size of the silicon resin is reduced, the amount of compression or extension of the silicon resin is also reduced, and thus a sufficient elastic or resilient force cannot be provided. Therefore, there is a limit on reduction of the size of the silicon resin, and thus, it is difficult to reduce the size of the pointing device.

### [Disclosure]

### [Technical Problem]

The present disclosure provides a pointing device and an electronic device including the pointing device. In the pointing device, an intermediate member including a plurality of curved strips is used to move and rotate a magnet member and return the magnet member to its original position. The number of the curved strips is optimized for making the pointing device slim and small, and interference between parts of the intermediate member is minimized for allowing a user to manipulate the pointing device with good feeling.

The present disclosure also provides a pointing device including an intermediate member that can be simply and easily fabricated and assembled, and an electronic device including the pointing device.

### [Technical Solution]

In accordance with an exemplary embodiment, a pointing device includes: an actuating member configured to be moved by a user; a magnet part disposed at a lower side of the actuating member; a cover part configured to cover the actuating member while exposing a part of the actuating member; an intermediate member including a center part configured to support the magnet part, a plurality of pattern parts extending from the center part and having a curved shape, a plurality of fixing parts disposed at ends of the pattern parts and fixed to the cover part, and a plurality of fixing protrusion parts extending from the center part for fixing the magnet part and the center part to the actuating member; and a sensor unit configured to output an electric signal by detecting a movement of the magnet part.

The actuating member may include: a post part including a first mounting groove and a second mounting groove, the first mounting groove being disposed in a bottom surface of the post part for receiving the magnet part, the second mounting groove having a diameter greater than that of the first mounting groove and disposed at an outside of the first mounting groove for enclosing an outer surface of the magnet part, the post part being exposed to an outside of the cover part; and a separation preventing part extending from a lower side of the post part and having a plate shape.

Each of the fixing protrusion parts may include: a horizontal protrusion part horizontally extending from the center part for supporting the magnet part; and a vertical protrusion part vertically extending from the horizontal protrusion part and fixed between the second mounting groove of the actuating member and the magnet part.

The actuating member may be formed of at least one of plastic, silicon resin, rubber, and metal.

Each of the pattern part may include: an S-shaped curved strip part having both ends connected to the center portion and the fixing part, respectively; and at least one deflection preventing protrusion disposed at a bottom side of the curved strip part.

The deflection preventing protrusion may have at least one shape of a semi-sphere shape, a semi-ellipsoid, a cone shape, an elliptic cone shape, and a poly-pyramid shape.

The curved strip part may include: a first connection part connected to the center part; a first extension strip part extending from the first connection part and having a circular arc shape; a second extension strip part extending from the first extending strip part and curved in a direction opposite to a curved direction of the first extension strip part; and a second connection part extending from the second extension strip part and fixed to the fixing part.

The first extension strip part may constitute about 1/2 to about 5/6 of a complete circle, and the complete circle may have a diameter greater than a diameter of the center part.

The actuating member may include a post part and a separation preventing part extending from a lower side of the post part, and the cover part may include a upper plate through which a penetration hole is formed for receiving the post part and a sidewall part extending from an edge portion of the upper plate, wherein a gap between the post part and the penetration hole may be smaller than a gap between the separation preventing part and the sidewall part, and a minimal gap between the first extension strip part and the sidewall part may be equal to or smaller than the gap between the post part and the penetration hole.

The second extension strip part may constitute about 1/6 to about 1/3 of a complete circle, and the complete circle may have a diameter of about 1/10 to about 6/10 that of the first extension strip part.

The number of the pattern parts may be three or four.

The intermediate member may be fabricated by a plastic injection molding method or a metal etching method, and the curved strip part may have a line width of about 0.2 mm to about 1.0 mm.

The pointing device may further include a substrate, wherein the cover part may be fixed to a top surface of the substrate, and a sensor part may be fixed to a bottom surface of the substrate, wherein the cover part may include: an accommodation body part including an upper plate through which a penetration hole is formed for receiving the post part, and a sidewall part extending an edge portion of the upper plate; a plurality of fixing notch parts disposed in a lower side of the sidewall part; and a plurality of hook parts extending from the lower side of the sidewall part and fixed to the substrate.

A dome switch may be disposed at a center of the top surface of the substrate, the center part may include a click protrusion part extending from a bottom surface of the center part and disposed on the dome switch, and the center part may have a diameter of about 20% to 80% of that of the magnet part.

In accordance with another exemplary embodiment, an electronic device includes: a control unit configured to process data; a display unit configured to display images; and a pointing device configured to output a signal for moving a cursor on the display unit, wherein the pointing device includes: an actuating member configured to be moved by a user; a magnet part disposed at a lower side of the actuating member; a cover part configured to cover the actuating member while exposing a part of the actuating member; an intermediate member including a center part configured to support the magnet part, a plurality of pattern parts extending from the center part and having a curved shape, a plurality of fixing parts disposed at ends of the pattern parts and fixed to the cover part, and a plurality of fixing protrusion parts extending from the center part for fixing the magnet part and the center part to the actuating member; and a sensor unit configured to output an electric signal by detecting a movement of the magnet part.

### [Advantageous Effects]

As described above, the magnet part can be supported by the fixing protrusion parts extending from the center part of the intermediate member, and the intermediate member, the magnet part, and the center part can be moved together by fixing the center part and the magnet part fixed to the intermediate member.

Furthermore, in a state where the center part of the intermediate member is fixed to the actuating member together with the magnet part by the fixing protrusion parts, the intermediate member can be fixed to the cover part by using the fixing parts of the intermediate member.

Furthermore, since the fixing protrusion parts and the fixing parts of the intermediate member can be fitted into the actuating member and the cover part, the pointing device can be simply assembled.

Furthermore, a resilient force can be applied to the magnet part and the center part fixed to the actuating member by using the pattern parts including the S-shaped curved strip parts connected between the center part and the fixing parts. In addition, the pointing device can be made slim and small.

Moreover, the number of the pattern parts including the curved strip parts can be set to three for minimize interference between the pattern parts. In this case, the manipulation sensitivity of the pointing device can be improved, and the magnet part can be moved with an increased range.

In addition, since the deflection preventing protrusions are provided on the bottom surfaces of the curved strip parts, the curved strip parts fixed to the cover part can be prevented from bending toward the substrate, and thus friction is not increased.

### [Description of Drawings]

FIG. 1 is an exploded perspective view illustrating a pointing device in accordance with an exemplary embodiment.
FIG. 2 is a cross-sectional view illustrating an assembled state of the pointing device in accordance with an exemplary embodiment.
FIG. 3 is a plan view illustrating an intermediate member of the pointing device in accordance with an exemplary embodiment.
FIG. 4 is a cross-sectional view illustrating the intermediate member in accordance with an exemplary embodiment.
FIG. 5 is a cross-sectional view illustrating a modification version of the intermediate member in accordance with an exemplary embodiment.
FIG. 6 is a bottom view illustrating the intermediate member coupled to a cover part in accordance with an exemplary embodiment.

### <Reference Numerals>

### <DESCRIPTION OF THE SYMBOLS IN MAIN PORTIONS OF THE DRAWINGS>

| | |
|---|---|
| 100: substrate | 200: intermediate member |
| 210: center part | 220: pattern part |
| 221: curved strip part | 222: deflection preventing protrusion |
| 230: fixing part | 240: fixing protrusion part |
| 241: horizontal protrusion part | |
| 242: vertical protrusion part | |
| 300: magnet part | 400: actuating member |
| 410: post part | 420: separation preventing part |
| 500: cover part | 510: accommodation body part |
| 520: fixing notch part | 530: fixing hook part |

### [Mode for Invention]

Hereinafter, specific embodiments will be described in detail with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. In the figures, like reference numerals refer to like elements throughout.

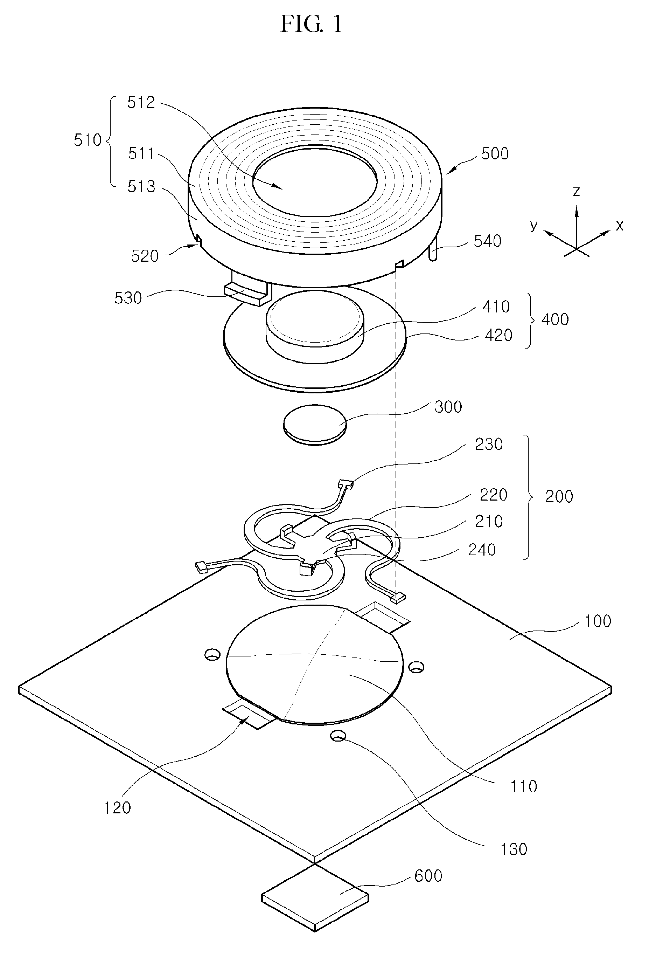

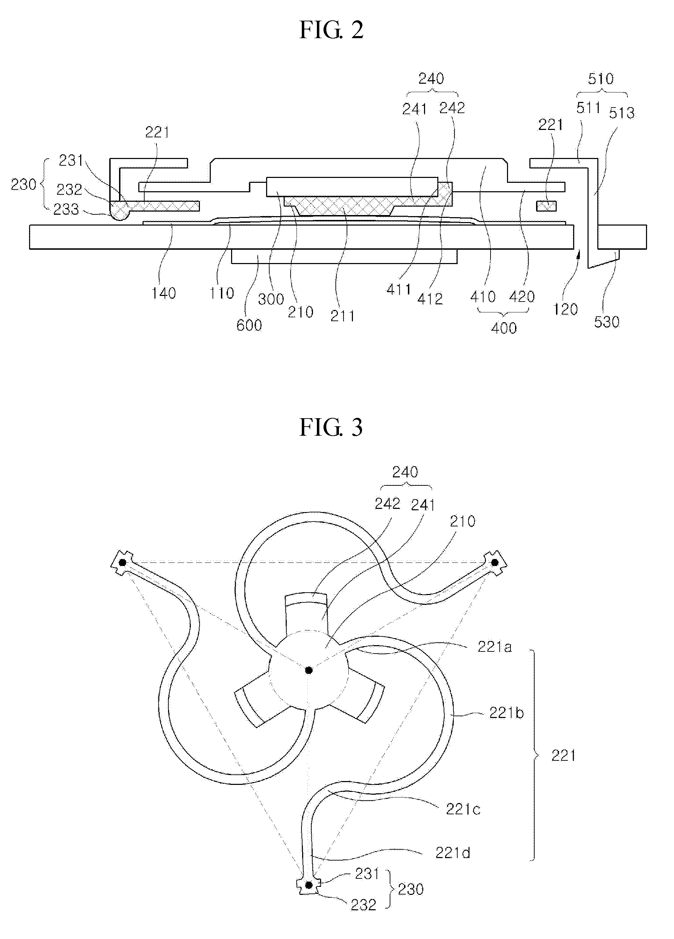

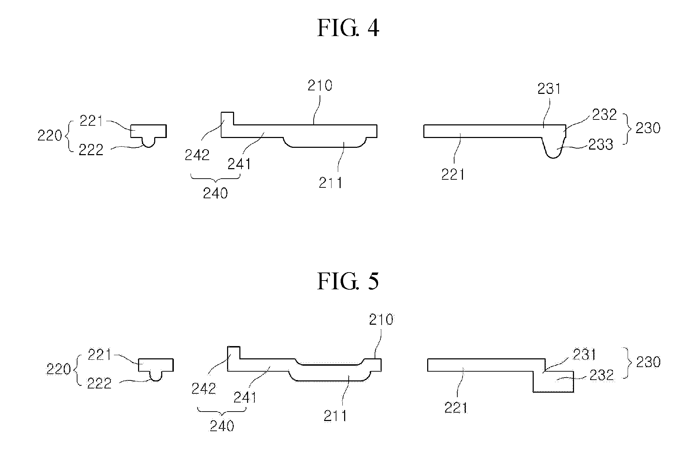

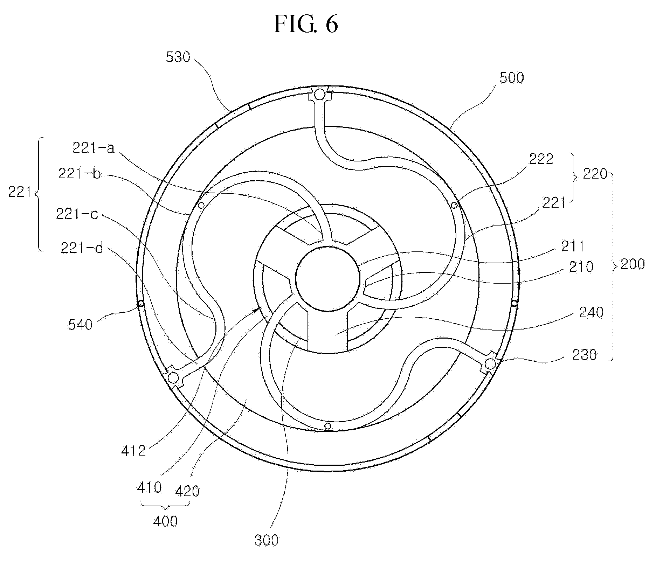

FIG. 1 is an exploded perspective view illustrating a pointing device in accordance with an exemplary embodiment; FIG. 2 is a cross-sectional view illustrating an assembled state of the pointing device in accordance with an exemplary embodiment; FIG. 3 is a plan view illustrating an intermediate member of the pointing device in accordance with an exemplary embodiment; FIG. 4 is a cross-sectional view illustrating the intermediate member in accordance with an exemplary embodiment; FIG. 5 is a cross-sectional view illustrating a modification version of the intermediate member in accordance with an exemplary embodiment; and FIG. 6 is a bottom view illustrating the intermediate member coupled to a cover part in accordance with an exemplary embodiment.

Referring to FIGS. 1 through 6, in accordance with an exemplary embodiment, the pointing device includes a substrate 100, a magnet part 300 disposed on the substrate 100, an actuating member 400 configured to move the magnet part 300 according to manipulation of a user, an intermediate member 200 configured to move, rotate, and restore the magnet part 300 and the actuating member 400, a sensor part 600 configured to output signals according to magnetic field variations caused by movements of the magnet part 300, and a cover part 500 fixed to the substrate 100 in a state where the intermediate member 200 is fixed to the cover part 500.

The substrate 100 may be a printed circuit board. The shape of the substrate 100 may be varied according to the shape of an apparatus in which the pointing device is used. In the current embodiment, the substrate 100 has a rectangular shape. However, the substrate 100 may have other shapes such as circular and polygonal shapes. In some cases, the substrate 100 may be not used. For example, a main substrate of an electronic device in which the pointing device is used may function as the substrate 100.

As shown in FIGS. 1 and 2, a dome switch 110 is disposed at the top surface of the substrate 100. Therefore, when the actuating member 400 is moved downward in a z-axis direction, the dome switch 110 is pressed by the intermediate member 200. The substrate 100 includes hook fixing holes 120 configured to fix hook parts of the cover part 500, and pin fixing holes 130 configured to receive fixing pin parts 540 of the cover part 500. Therefore, the cover part 500 can be fixed to the substrate 100 and kept stable without motion relative to the substrate 100. The hook fixing holes 120 and the pin fixing holes 130 may be arranged around the dome switch 110.

As shown in FIG. 2, a lubrication pad 140 is disposed at least on the dome switch 110. A Teflon tape may be used as the lubrication pad 140 for reducing friction between the dome switch 110 and the intermediate member 200. Besides the Teflon tape, other wear-resistant lubricant materials may be used for reducing friction between the dome switch 110 and the intermediate member 200.

As shown in FIGS. 1 and 2, the sensor part 600 is disposed on the bottom side of the substrate 100. The sensor part 600 outputs a movement detecting signal according to magnetic field variations caused by a movement of the magnet part 300 disposed at the upper side of the substrate 100. That is, the sensor part 600 detects movements (two-dimensional movements) of the magnet part 300 in up, down, left, and right directions.

The sensor part 600 includes a plurality of magnetic sensors configured to output x-axis coordinate signals according to magnetic field variations caused by a movement of the magnet part 300 in an x-axis direction, and a plurality of magnetic sensors configured to output y-axis coordinate signals according to magnetic field variations caused by a movement of the magnet part 300 in an y-axis direction. In addition, a control unit (not shown) amplifies output signals of the magnetic sensors of the sensor part 600 and detects overall magnetic field variations using the amplified output signals. In the current embodiment, the magnetic sensors of the sensor part 600 are modulated in one sensor chip. However, the present invention is not limited thereto. That is, instead of modulating the magnetic sensors, the magnetic sensors may be arranged around the magnet part 300 at four positions (that is, in up, down, left, and right directions), respectively. In this case, the magnetic sensors may be symmetric with respect to the center portion of the magnet part 300.

In the current embodiment, the magnetic sensors of the sensor part 600 may be hole devices, semiconductor magnetic resistive devices, or magneto magnetic resistive devices or giant magneto resistive (GMR). The electric characteristics of the magnetic sensors may be varied according to variations of a magnetic field applied to the magnetic sensors. In the current embodiment, the magnetic sensors are hole devices of which output voltages are varied in proportion to a magnetic flux.

The magnet part 300 is disposed at an upper region of the substrate 100 as described above. The magnet part 300 is disposed at center portions of the intermediate member 200 and the actuating member 400. The magnet part 300 is moved according to a movement of the actuating member 400 and is moved back to its original position by the intermediate member 200.

In the current embodiment, the magnet part 300 may be a circular magnet of which the top and bottom sides are magnetized. However, the present invention is not limited thereto. For example, the magnet part 300 may be a magnet having multiple poles (e.g., two, four, or eight poles) on its one surface or a magnet having different multiple poles on its one surface. In addition, the magnet part 300 may be a magnet having a rectangular, elliptical, circular ring, or polygonal shape.

The actuating member 400 is disposed at the top side of the magnet part 300. The actuating member 400 is movable by manipulation of a user.

As shown in FIGS. 1 and 6, the actuating member 400 includes a post part 410 and a separation preventing part 420. The magnet part 300 is disposed at a center region of the bottom side of the post part 410, and the separation preventing part 420 extends from the post part 410. The post part 410 has a cylindrical shape. The post part 410 includes a first mounting groove 411 and a second mounting groove 412. The first mounting groove 411 is formed in the bottom side of the post part 410 for receiving a portion of the magnet part 300, and the second mounting groove 412 is formed in the bottom side of the post part 410 for receiving portions of the intermediate member 200 to fix the magnet part 300. The second mounting groove 412 may be disposed around the first mounting groove 411. The first mounting groove 411 may have a diameter similar to that of the magnet part 300. For example, the diameter of the first mounting groove 411 may be larger than the diameter of the magnet part 300 by about 0.01 mm to about 0.5 mm. In this case, when fixing the magnet part 300 to the first mounting groove 411, the upper part of the magnet part 300 may be smoothly inserted into the first mounting groove 411.

The separation preventing part 420 extends from a lower side of the post part 410 and has a disk shape. As shown in FIGS. 1 and 6, the separation preventing part 420 may have a disk shape disposed around the post part 410. However, the present invention is not limited thereto. For example, the separation preventing part 420 may include a plurality of disks disposed around the post part 410. Owing to the separation preventing part 420, the actuating member 400 is not moved to the outside of the cover part 500 disposed at the top side of the actuating member 400.

In the current embodiment, the actuating member 400 may be formed of a metal. In this case, owing to a magnetic force acting between the magnet part 300 and the actuating member 400, the magnet part 300 can be fixed to the actuating member 400 by partially inserting the magnet part 300 into the first mounting groove 411 of the actuating member 400. However, the present invention is not limited thereto. For example, the actuating member 400 may be formed of a material such as plastic, silicon resin, and rubber. In the case where the actuating member 400 is formed of a metal, a magnetic field formed by the magnet part 300 can be blocked by the actuating member 400, and the actuating member 400 can have a small thickness.

The actuating member 400 is configured to be moved and rotated by an external force (that is, a manipulation motion of a user), and the movement or rotation of the actuating member 400 is transmitted to the magnet part 300. That is, since the magnet part 300 fixed to the actuating member 400, the magnet part 300 is moved and rotated together with the actuating member 400.

If the external force applied to the actuating member 400 is removed, the actuating member 400 and the magnet part 300 are returned to their original positions by the intermediate member 200. In the current embodiment, the intermediate member 200 is configured to fix the magnet part 300 to the actuating member 400 and apply an elastic resilient force.

As shown in FIGS. 1 through 6, the intermediate member 200 includes a center part 210, a plurality of pattern parts 220 extending from the center part 210, a plurality of fixing parts 230 disposed at end portions of the pattern parts 220, and fixing protrusion parts 240 protruded from the center part 210 for supporting and positioning the magnet part 300. The intermediate member 200 may be formed of a high-strength plastic (e.g., polyoxymethylene (POM) or Polycarbonate (PC)) by an injection molding method. In this case, since the intermediate member 200 can be manufactured through a simple process, mass production of the intermediate member 200 can be easily carried out. In addition, the center part 210, the pattern parts 220, the fixing parts 230, and the fixing protrusion parts 240 of the intermediate member 200 may be formed in one piece. However, the present invention is not limited thereto. The intermediate member 200 may be formed of a metal. In this case, the intermediate member 200 may be formed through a metal etching or cutting process. Alternatively, the intermediate member 200 may be formed of a lubricant, abrasion-resistant, and elastically resilient material.

The center part 210 has a circular plate shape. In this case, interference between the center part 210 and the pattern parts 220 can be minimized. However, the present invention is not limited thereto. For example, the center part 210 may have an elliptical or polygonal shape. As shown in FIGS. 2 and 4, the center part 210 includes a click protrusion part 211 protruded downward from the bottom side of the center part 210. Owing to the click protrusion part 211, the dome switch 110 can be clicked with good feeling. That is, the dome switch 110 can be easily clicked with a less force, and a user can feel the same clicking feeling regardless of the position of the intermediate member 200. In addition, owing to the click protrusion part 211, the pattern parts 220 formed on the same plane as the center part 210 can be spaced apart from the substrate 100. However, the present invention is not limited thereto. In a modification version of the intermediate member 200 shown in FIG. 5, the click protrusion part 211 can be formed by protruding a center portion of the center part 210.

The center part 210 is located at the center position of the fixing parts 230. In the current embodiment, three fixing parts 230 are disposed around the center of the center part 210 as shown in FIGS. 1 and 3. In detail, the center of the center part 210 is located at the center of a triangle formed by the three fixing parts 230.

As shown in FIG. 2 and 6, the center part 210 may be smaller than the magnet part 300 placed on the center part 210. For example, the diameter of the center part 210 may range from about 20% to 80% of the diameter of the magnet part 300. In this case, the pattern parts 220 extending from the center part 210 can be moved within a sufficient space (region). The diameter of the center part 210 may be at least about 0.6 mm. If the diameter of the center part 210 is smaller than about 0.6 mm, it may be difficult to manufacture the center part 210 and the pattern parts 220 extending from the center part 210 by using an injecting molding method.

In the current embodiment, each of the pattern parts 220 includes a curved strip part 221. The curved strip part 221 extends from the center part 210 to the fixing part 230 in a predetermined shape. That is, both ends of the curved strip part 221 are respectively connected to the center part 210 and the fixing part 230. As shown in FIGS. 4 and 6, each of the pattern parts 220 includes a deflection preventing protrusion part 222 on a bottom surface of the curved strip part 221.

The deflection preventing protrusion part 222 is protruded from the bottom surface of the curved strip part 221 toward the substrate 100. Owing to the deflection preventing protrusion parts 222, deflection of the pattern parts 220 can be prevented. In the current embodiment, the center part 210 is at the top side of the dome switch 110, and the fixing parts 230 are fixed to the cover part 500. Therefore, the pattern parts 220 provided between the center part 210 and the fixing parts 230 are spaced apart from the substrate 100. However, after being used for a long time, the curved strip parts 221 of the pattern parts 220 can be downwardly bent by their weights. In this case, large portions of the curved strip parts 221 may be in contact with the substrate 100. This increases friction between the curved strip parts 221 and the substrate 100, and thus the manipulation sensitivity of the pointing device may be decreased. However, in the current embodiment, although the curved strip parts 221 of the pattern parts 220 are downwardly bent, the curved strip parts 221 do not make contact with the substrate 100. Instead, only the deflection preventing protrusion parts 222 make contact with the substrate 100, and thus the friction between the pattern parts 220 and the substrate 100 is not increased so that the manipulation sensitivity of the pointing device can be maintained. Referring to FIGS. 2 and 6, one deflection preventing protrusion part 222 is formed on one pattern part 220. However, the present invention is not limited thereto. For example, a plurality of deflection preventing protrusion parts 222 may be formed on one curved strip part 221. As shown in FIG. 4, the deflection preventing protrusion part 222 may have a semi-sphere shape. However, the present invention is not limited thereto. For example, the deflection preventing protrusion part 222 may have a semi-ellipsoid, cone, elliptic cone, or poly-pyramid shape.

When the center part 210 is moved or rotated by an external force, the pattern parts 220 support the center part 210, and when the external force is removed (that is, when the center part 210 is not moved or rotated, the pattern parts 220 return the center part 210 to its original position.

The shape and number of the pattern parts 220 have an influence on the resilience of the pattern parts 220 and the manipulation sensitivity of the pointing device. That is, the resilience of the pattern parts 220 and the manipulation sensitivity of the pointing device are varied according to the number and shape of the curved strip parts 221, and the number of inflection points of the curved strip parts 221. In addition, the resilience and manipulation sensitivity are affected by the distance between the curved strip parts 221.

Since the pattern parts 220 tend to return to their original positions when they are deformed (compressed or elongated), the manipulation sensitivity of the pointing device is affected. In addition, the manipulation sensitivity may be largely affected by contacting or overlapping motions of the curved strip parts 221.

In the current embodiment, the number of the pattern parts 220 (that is, the number of the curved strip parts 221) is three. In this case, movable spaces of the curved strip parts 221 can be large, and the center part 210 can be effectively supported. In addition, the possibility of overlapping (or contacting) between the curved strip parts 221 can be minimized. For example, if the pattern parts 220 are fewer than three, it may be difficult to support the center part 210 stably. Alternatively, the number of the pattern parts 220 may be four. However, in the case where the number of the pattern parts 220 is four or more, movable spaces of the curved strip parts 221 of the pattern parts 220 may be reduced, the manipulation sensitivity may be reduced due to interference between the curved strip parts 221.

As shown in FIGS. 1, 3, and 4, each of the curved strip parts 221 is approximately S-shaped (that is, a sinusoidal curve shape). Furthermore, in the current embodiment, the intermediate member 200 including the pattern parts 220 is fabricated through an injection molding process. Therefore, the line width of the curved strip parts 221 may be in the range from about 0.2 mm to about 1.0 mm.

As shown in FIG. 3, each of the curved strip parts 221 includes: a first connection part 221-a connected to the center part 210; a first extension strip part 221-b extending from the first connection part 221-a in a circular arc shape; a second extension strip part 221-c bent and extending from the first extension strip part 221-b in a circular arc shape; and a second connection part 221-d extending from the second extension strip part 221-c and connected to the fixing part 230. The first and second extension strip parts 221-b and 221-c are curved in different directions. For example, as shown in FIG. 3, if the first extension strip part 221-b is curved clockwise from the first connection part 221-a, the second extension strip part 221-c may be curved counterclockwise.

The first connection part 221-a is an end part of the curved strip part 221 connected to one side of the center part 210.

The first extension strip part 221-b has a circular arc shape. The first extension strip part 221-b may have a circular arc shape ranging from about 1/2 to about 5/6 of a complete circle. In the case, the manipulation sensitivity and elastic resilience of the first extension strip part 221-b can be increased. If the first extension strip part 221-b is larger than the above-mentioned range, the first extension strip part 221-b may be overlapped with the center part 210. If the first extension strip part 221-b is smaller than the above-mentioned range, the resilience of the first extension strip part 221-b may be decreased, and the center part 210 may not be easily returned to its original position. The above-mentioned complete circle may be overlapped with the center part 210.

Since the first extension strip part 221-b has a circular arc shape, when the center part 210 is moved by the actuating member 400, a force (two-dimensional force) acting on the center part 210 can be distributed to the first extension strip part 221-b. In addition, owing to the circular arc shape of the first extension strip part 221-b (that is, a strip shape similar to a part of a circle or a horseshoe), both ends of the circular arc are getting closer or farther when a force is applied to the first extension strip part 221-b. Therefore, the force can be uniformly distributed to the first extension strip part 221-b, and the first extension strip part 221-b can easily return to its original position after the force is removed.

The diameter of the arc shape of the first extension strip part 221-b may be greater than the diameter of the center part 210 but smaller than the distance between the center part 210 and the cover part 500. For example, the diameter of the arc shape may be equal to or smaller than a length calculated by subtracting the distance between the separation preventing part 420 of the actuating member 400 and the lateral side of cover part 500 from the distance between the center part 210 and the cover part 500. Alternatively, the diameter of the arc shape may be greater than the above-mentioned length; however, in this case, the size of the pointing device may increase. Alternatively, the diameter of the arc shape may be equal to or smaller than a length calculated by subtracting the horizontal distance between the post part 410 of the actuating member 400 and a penetration hole 512 of the cover part 500 from the distance between the center part 210 and the cover part 500.

As shown in FIG. 6, the first extension strip part 221-b may be located within the region of the separation preventing part 420 of the actuating member 400. In this case, the movement of the actuating member 400 may be efficiently used, and the first extension strip part 221-b can be moved with a smaller force. In addition, interference between the first extension strip part 221-b and the inner wall of the cover part 500 can be prevented.

The minimal distance between the first extension strip part 221-b and a lateral surface (an inner wall surface) of the cover part 500 may be equal to the distance between the separation preventing part 420 and the inner wall surface of the cover part 500. That is, by this, the size of the pointing device can be reduced. Further, the first extension strip part 221-b can be moved within an increased range. Alternatively, the minimal distance between the first extension strip part 221-b and a lateral surface (an inner wall surface) of the cover part 500 may be smaller than the distance between the separation preventing part 420 and the inner wall surface of the cover part 500. In this case, the movable range of the first extension strip part 221-b can be further increased. If the minimal distance between the first extension strip part 221-b and the lateral surface (inner wall surface) of the cover part 500 is greater than the distance between the separation preventing part 420 and the inner wall surface of the cover part 500, the movable range of the first extension strip part 221-b is decreased. However, if necessary, the minimal distance between the first extension strip part 221-b and the lateral surface (inner wall surface) of the cover part 500 may be varied.

The minimal distance between the first extension strip part 221-b and the lateral surface (inner wall surface) of the cover part 500 may be substantially equal to the horizontal distance between the post part 410 of the actuating member 400 and the penetration hole 512 of the cover part 500.

The second extension strip part 221-c has a circular arc shape. The second extension strip part 221-c is curved in a direction opposite to the curved direction of the first extension strip part 221-b, so as to support movement of the first extension strip part 221-b and receive a portion of a force acting on the first extension strip part 221-b. An imaginary circle formed by the circular arc shape of the second extension strip part 221-c may have a diameter smaller than the diameter of the first extension strip part 221-b. For example, the diameter of the arc-shaped second extension strip part 221-c may be about 1/10 to about 6/10 the diameter of the first extension strip part 221-b. The arc-shaped second extension strip part 221-c may constitute about 1/6 to about 1/3 of a complete circle. If the second extension strip part 221-c is smaller than the range, the second extension strip part 221-c may be easily damaged or broken. If the second extension strip part 221-c is larger than the above range, the curved strip part 221 may not be sensitively moved.

The second connection part 221-d has a linear shape extending from an end of the second extension strip part 221-c. When the 221-c is bent by an external force, the second connection part 221-d supports the second extension strip part 221-c.

In the current embodiment, as shown in FIG. 6, the distance between neighboring two of the curved strip parts 221 is larger or equal to the distance between the cover part 500 and one of the neighboring two. The first extension strip part 221-b of one of the neighboring two may be adjacent to the second extension strip part 221-c of the other of the neighboring two.

Ends of the curved strip parts 221 are connected to the fixing parts 230. The fixing parts 230 are fixed to the cover part 500. Therefore, escaping of the curved strip parts 221 can be prevented. In addition, the fixed ends of the curved strip parts 221 may be used as reference points for designing the resilience of the intermediate member 200.

Owing to the above-described structure of the curved strip parts 221, the center part 210 may be two-dimensionally moved within a range of about 0.6 mm to about 3.0 mm when a force is applied to the center part 210. The center part 210 may be moved in a linear, curved, or circular pattern. When the force is removed from the center part 210, the center part 210 may smoothly return to the center position of the fixing parts 230 by the curved strip parts 221.

In the current embodiment, the fixing parts 230 are fixed to the cover part 500. Each of the fixing parts 230 includes a fixing support part 231, a fixing protrusion part 232 extending horizontally from the fixing support part 231 for being fixed to the cover part 500, and a fixing boss 233 disposed at the bottom side of the fixing support part 231 and the fixing protrusion part 232.

The fixing protrusion part 232 may be fixed to the cover part 500 by fitting the fixing protrusion part 232 into a notch of the cover part 500. For example, in the current embodiment, the fixing protrusion part 232 may have a trapezoidal shape for being securely fixed to the notch of the cover part 500. In a state where the fixing protrusion part 232 is fixed to the cover part 500, the fixing part 230 may be spaced a predetermined distance from the substrate 100. Thus, if the fixing protrusion part 232 is pushed toward the substrate 100 by an external force, the fixing protrusion part 232 can be easily released from the notch of the cover part 500. For this reason, in the current embodiment, the fixing boss 233 is formed at the space between the fixing protrusion part 232 and the substrate 100. When the cover part 500 and the substrate 100 are assembled, the fixing part 230 can be completely coupled to the cover part 500 by pressing the bottom side of the fixing protrusion part 232 through the fixing boss 233. However, the present invention is not limited thereto. Alternatively, instead of forming the fixing boss 233, the fixing support part 231 and the fixing protrusion part 232 may be disposed at a height lower than the horizontal plane of the curved strip part 221 as shown in a modification example of FIG. 5. That is, the fixing part 230 may be formed in a shape bent and extending from the curved strip part 221.

In the intermediate member 200 of the current embodiment, the center part 210 is smaller than the magnet part 300 so as to increase the movable range of the pattern parts 220, specifically, the curved strip parts 221. In this case, the magnet part 300 may not be stably supported by the center part 210, and a force applied to the magnet part 300 from the actuating member 400 may not be stably transmitted to the center part 210. Furthermore, the resilient force of the pattern parts 220 may not be stably transmitted to the magnet part 300 through the center part 210.

To prevent these possibilities, the fixing protrusion parts 240 are disposed on the center part 210 of the intermediate member 200. The fixing protrusion parts 240 support the magnet part 300 and transmit actuating and resilient forces of the intermediate member 200 to the magnet part 300.

Each of the fixing protrusion parts 240 includes a horizontal protrusion part 241 and a vertical protrusion part 242. The horizontal protrusion part 241 extends horizontally from the center part 210, and the vertical protrusion part 242 extends vertically from the horizontal protrusion part 241 (that is, the vertical protrusion part 242 extends in an upward direction of the center part 210). In the embodiment shown in FIG. 1, the number of the fixing protrusion parts 240 is three. Each of the fixing protrusion parts 240 is disposed between the first connection parts 221-a of the curved strip parts 221 connected to the center part 210. That is, the horizontal protrusion parts 241 extend from regions of the center part 210 located between the first connection parts 221-a. The horizontal protrusion parts 241 extend between the first extension strip parts 221-b of the curved strip parts 221. The distance between ends of the horizontal protrusion parts 241 and the first extension strip parts 221-b may be equal to or greater than the distance between the separation preventing part 420 of the actuating member 400 and the lateral surface of the cover part 500.

In the current embodiment, since the horizontal protrusion parts 241 extend horizontally from the center part 210, the magnet part 300 can be supported by both the horizontal protrusion parts 241 and the center part 210. In addition, since the vertical protrusion parts 242 extend vertically with respect to the center part 210, the lateral side of the magnet part 300 can be supported by the vertical protrusion parts 242. The vertical protrusion parts 242 may have a circular arc shape (or a curved shape) for stably supporting the magnet part 300. That is, the vertical protrusion parts 242 have a shape corresponding to the shape of the lateral side of the circular magnet part 300, so that the vertical protrusion parts 242 can be in tight contact with the magnet part 300. The vertical protrusion parts 242 are inserted and fixed between the magnet part 300 and the actuating member 400. That is, as shown in FIGS. 2 and 6, the vertical protrusion parts 242 are inserted between the magnet part 300 and the second mounting groove 412.

Thus, the magnet part 300 can be fixed by the fixing protrusion parts 240, and motions of the actuating member 400 can be transmitted from the fixing protrusion parts 240 to the pattern parts 220 via the center part 210. Further, the resilience of the pattern parts 220 can be transmitted to the magnet part 300 and the actuating member 400.

As described above, the first mounting groove 411 is formed in the bottom side of the actuating member 400 for receiving the magnet part 300, and the second mounting groove 412 having a diameter larger than that of the first mounting groove 411 is formed around the first mounting groove 411. Therefore, in the current embodiment, the magnet part 300 and the center part 210 of the intermediate member 200 can be fixed by inserting the magnet part 300 into the first mounting groove 411, and inserting the fixing protrusion parts 240 of the intermediate member 200 between the magnet part 300 and the second mounting groove 412. In this way, the magnet part 300, the actuating member 400, and the intermediate member 200 can be fixedly assembled without using an additional adhesive or coupling member, and the assembling of the pointing device can be efficiently carried out.

In the current embodiment, the magnet part 300 is fixed to the actuating member 400 by the fixing protrusion parts 240 of the intermediate member 200, and the actuating member 400 and the magnet part 300 are fixed to the cover part 500 by the fixing parts 230 of the intermediate member 200 fixed to the cover part 500.

The cover part 500 includes: an accommodation body part 510 including a sidewall part 513 and an upper plate 511 in which the penetration hole 512 is formed; fixing notch parts 520 formed in a lower side of the sidewall part 513; fixing hook parts 530 extending from the lower side of the sidewall part 513; and a plurality of fixing pin parts 540 extending from the lower side of the sidewall part 513.

When assembled, the post part 410 of the actuating member 400 protrudes through the penetration hole 512. The diameter of the penetration hole 512 may be greater than the diameter of the post part 410. In this case, a gap may be formed between the post part 410 and the penetration hole 512 to allow two-dimensional movement of the magnet part 300. The gap between the post part 410 and the penetration hole 512 may be smaller than a gap between the separation preventing part 420 of the actuating member 400 and the sidewall part 513 of the cover part 500. For example, the gap between the separation preventing part 420 and the sidewall part 513 of the cover part 500 may be about 1.05 to about 1.2 the gap between the post part 410 and the penetration hole 512. If the size relationship between the gaps departs from the above-mentioned range, the movement (manipulation sensitivity) of the actuating member 400 may be reduced. For example, if the gap between the separation preventing part 420 and the sidewall part 513 is smaller than the above-mentioned range, the actuating member 400 may not be smoothly moved. If the gap between the separation preventing part 420 and the sidewall part 513 is greater than the range, the manipulation sensitivity of the actuating member 400 may be decreased, and it may be difficult to reduce the size of the pointing device.

The fixing parts 230 are inserted into the fixing notch parts 520. By this, the intermediate member 200 can be fixed to the cover part 500, and the magnet part 300 and the actuating member 400 fixed by the fixing protrusion parts 240 of the intermediate member 200 can be fixed to the cover part 500.

The fixing hook parts 530 are coupled to the hook fixing holes 120 of the substrate 100. By this, the bottom side of the sidewall part 513 of the cover part 500 can be in tight contact with the substrate 100 and fixed to the substrate 100. In the current embodiment, the fixing pin parts 540 of the cover part 500 are inserted and fixed to the pin fixing holes 130 of the substrate 100. In the current embodiment, two fixing pin parts 540 are symmetrically disposed with respect to the center of the accommodation body part 510, and the two fixing pin parts 540 are respectively inserted and fixed to the pin fixing holes 130 of the substrate 100. Therefore, relative movement such as trembling of the cover part 500 can be prevented, and detachment of the cover part 500 can be prevented.

In a state where the cover part 500 is fixed to the substrate 100 by using the fixing hook parts 530 and the fixing pin parts 540, the center part 210 of the intermediate member 200 can be fixedly positioned in contact with the dome switch 110. In detail, the click protrusion part 211 of the center part 210 is brought into contact with the dome switch 110.

As described above, the center part 210 supports the magnet part 300, and the magnet part 300 and the center part 210 are fixed to the actuating member 400 by the fixing protrusion parts 240 of the intermediate member 200. In this structure, for example, if a first force is applied to the actuating member 400 by a user, the actuating member 400 is moved downward in a vertical direction (z-axis direction) such that the dome switch 110 can be clicked by the click protrusion part 211. If a second force smaller than the first force is applied, the actuating member 400 is horizontally moved (a two-dimensional movement on an x-y plane). At this time, the magnet part 300 and the center part 210 are moved together. In this way, the click protrusion part 211 disposed in contact with the dome switch 110 is used to click the dome switch 110 according to a force applied by a user, and the click protrusion part 211 supports two-dimensional movements of the center part 210, the magnet part 300, and the actuating member 400. That is, the click protrusion part 211 prevents deflection of the center part 210. If a force applied to the click protrusion part 211 by a user is removed, the click protrusion part 211 is returned to its original position by the resilience of the pattern parts 220. At this time, ends of the pattern parts 220 are fixed by the fixing parts 230. The fixing parts 230 may be fixed to the top side of the substrate 100 by the fixing notch parts 520 of the cover part 500. In this case, arbitrary movements of the fixing parts 230 (caused by a forced applied by a user) can be prevented.

The pointing device explained according to the exemplary embodiments can be used for various electronic devices such as portable terminals. For example, the pointing device can be used for various electronic devices such as cellular phones, digital cameras, camcorders, MP3 players, PMPs, PDAs, GPSs, laptop computers, electronic game machines, remote controllers, and electronic dictionaries. Such an electronic device includes a control unit configured to processing signals (data) and a display unit configured to display images. A pointer or cursor may be provided on the screen of the display unit. The pointer or cursor of the display unit of the electronic device may be moved by a signal input through an input unit. The pointing device may be used as such an input unit. That is, a signal (coordinate signal) of the sensor part of the pointing device may be input to the control unit, and the cursor of the display unit may be moved according to the signal by the control unit.

The pointing device of the present invention configured to be used in an electronic device is not limited to the above-described configurations. For example, various sensors configured to move a cursor on a screen, and units configured to drive the sensors may be added to the pointing device. For instance, an optical sensor may be used to detect the movement of the actuating member and move a cursor of a screen based on the detected result.

Although the pointing device and the electronic device including the same have been described with reference to the specific embodiments, it is not limited thereto. Therefore, it will be readily understood by those skilled in the art that various modifications and changes can be made thereto without departing from the spirit and scope of the present invention defined by the appended claims.

## Claims

1. A pointing device comprising:
an actuating member configured to be moved by a user;
a magnet part disposed at a lower side of the actuating member;
a cover part configured to cover the actuating member while exposing a part of the actuating member;
an intermediate member comprising a center part configured to support the magnet part, a plurality of pattern parts extending from the center part and having a curved shape, a plurality of fixing parts disposed at ends of the pattern parts and fixed to the cover part, and a plurality of fixing protrusion parts extending from the center part for fixing the magnet part and the center part to the actuating member; and
a sensor unit configured to output an electric signal by detecting a movement of the magnet part.

2. The pointing device of claim 1, wherein the actuating member comprises:
a post part comprising a first mounting groove and a second mounting groove, the first mounting groove being disposed in a bottom surface of the post part for receiving the magnet part, the second mounting groove having a diameter greater than that of the first mounting groove and disposed at an outside of the first mounting groove for enclosing an outer surface of the magnet part, the post part being exposed to an outside of the cover part; and
a separation preventing part extending from a lower side of the post part and having a plate shape.

3. The pointing device of claim 2, wherein each of the fixing protrusion parts comprises:
a horizontal protrusion part horizontally extending from the center part for supporting the magnet part; and
a vertically protrusion part vertically extending from the horizontal protrusion part and fixed between the second mounting groove of the actuating member and the magnet part.

4. The pointing device of claim 2, wherein the actuating member is formed of at least one of plastic, silicon resin, rubber, and metal.

5. The pointing device of claim 1, wherein each of the pattern part comprises:
an S-shaped curved strip part having both ends connected to the center portion and the fixing part, respectively; and
at least one deflection preventing protrusion disposed at a bottom side of the curved strip part.

6. The pointing device of claim 5, wherein the deflection preventing protrusion has at least one shape of a semi-sphere shape, a semi-ellipsoid, a cone shape, an elliptic cone shape, and a poly-pyramid shape.

7. The pointing device of claim 5, wherein the curved strip part comprises:
a first connection part connected to the center part;
a first extension strip part extending from the first connection part and having a circular arc shape;
a second extension strip part extending from the first extension strip part and curved in a direction opposite to a curved direction of the first extension strip part; and
a second connection part extending from the second extension strip part and fixed to the fixing part.

8. The pointing device of claim 7, wherein the first extension strip part constitutes about 1/2 to about 5/6 of a complete circle, and the complete circle has a diameter greater than a diameter of the center part.

9. The pointing device of claim 7, wherein the actuating member comprises a post part and a separation preventing part extending from a lower side of the post part, and
the cover part comprises a upper plate through which a penetration hole is formed for receiving the post part and a sidewall part extending from an edge portion of the upper plate,
wherein a gap between the post part and the penetration hole is smaller than a gap between the separation preventing part and the sidewall part, and
a minimal gap between the first extension strip part and the sidewall part is equal to or smaller than the gap between the post part and the penetration hole.

10. The pointing device of claim 7, wherein the second extension strip part constitutes about 1/6 to about 1/3 of a complete circle, and the complete circle has a diameter of about 1/10 to about 6/10 that of the first extension strip part.

11. The pointing device of any one of claims 1, 2, and 5, wherein the number of the pattern parts is three or four.

12. The pointing device of any one of claims 1, 2, and 5, wherein the intermediate member is fabricated by a plastic injection molding method or a metal etching method, and the curved strip part has a line width of about 0.2 mm to about 1.0 mm.

13. The pointing device of any one of claims 1, 2, and 5, further comprising a substrate, wherein the cover part is fixed to a top surface of the substrate, and a sensor part is fixed to a bottom surface of the substrate,
wherein the cover part comprises:
an accommodation body part comprising an upper plate through which a penetration hole is formed for receiving the post part, and a sidewall part extending from an edge portion of the upper plate;
a plurality of fixing notch parts disposed in a lower side of the sidewall part; and
a plurality of hook parts extending from the lower side of the sidewall part and fixed to the substrate.

14. The pointing device of claim 13, wherein a dome switch is disposed at a center of the top surface of the substrate,
the center part comprises a click protrusion part extending from a bottom surface of the center part and disposed on the dome switch, and
the center part has a diameter of about 20% to 80% of that of the magnet part.

15. An electronic device comprising:
a control unit configured to process data;
a display unit configured to display images; and
a pointing device configured to output a signal for moving a cursor on the display unit,
wherein the pointing device comprises:
an actuating member configured to be moved by a user;
a magnet part disposed at a lower side of the actuating member;
a cover part configured to cover the actuating member while exposing a part of the actuating member;
an intermediate member comprising a center part configured to support the magnet part, a plurality of pattern parts extending from the center part and having a curved shape, a plurality of fixing parts disposed at ends of the pattern parts and fixed to the cover part, and a plurality of fixing protrusion parts extending from the center part for fixing the magnet part and the center part to the actuating member; and
a sensor unit configured to output an electric signal by detecting a movement of the magnet part.
